# EUROPÄISCHE PATENTSCHRIFT

(11) **EP 2 203 638 B1**
(45) Veröffentlichungstag und Bekanntmachung des Hinweises auf die Patenterteilung: **14.05.2014**
(21) Anmeldenummer: 08804318.7
(22) Anmeldetag: 17.09.2008
(51) Int. Cl.: F02N 19/04

(54) **HEIZEINRICHTUNG FÜR FLÜSSIGE BRENNSTOFFE UND DERGLEICHEN**
HEATING UNIT FOR LIQUID FUELS AND THE LIKE
DISPOSITIF DE CHAUFFAGE DE COMBUSTIBLES LIQUIDES ET SIMILAIRES

(30) Priorität: 18.10.2007 DE 102007049973
(43) Veröffentlichungstag der Anmeldung: 07.07.2010
(73) Patentinhaber: Robert Bosch GmbH, 70442 Stuttgart (DE)
(72) Erfinder: SCHNEIDER, Jens, 71229 Leonberg (DE); COUFFIGNAL, Jean-Marc, F-12390 Auzits (FR); ERNST, Stephan, 76332 Bad Herrenalb (DE)
(86) Internationale Anmeldenummer: PCT/EP2008/062367
(87) Internationale Veröffentlichungsnummer: WO 2009/053174

(56) Entgegenhaltungen:
- EP-A- 0 068 688
- EP-A- 1 036 930
- EP-A- 1 657 425
- WO-A-95/08395
- WO-A-2006/130938
- DE-U1- 20 021 203
- DE-U1- 20 121 116

## Beschreibung

### Stand der Technik

Die Erfindung betrifft eine Heizeinrichtung. Speziell betrifft die Erfindung einen Heizer für flüssige Brennstoffe, der in eine Komponente eines Brennstoffeinspritzsystems integriert sein kann. Dabei eignet sich die Heizeinrichtung unter anderem für ein Brennstoffeinspritzventil von luftverdichtenden, selbstzündenden Brennkraftmaschinen.

Aus der DE 40 05 455 A1 ist ein Einspritzventil für eine Brennkraftmaschine bekannt. Dabei ist ein piezoelektrisches Betätigungsglied für eine Ventilnadel vorgesehen. Ferner ist ein mit Brennstoff gefüllter Raum vorgesehen, der über eine Federmembran abgedichtet ist, die zugleich als Rückstellfeder für die Ventilnadel dient.

Bei dem aus der DE 40 05 455 A1 bekannten Einspritzventil wird der Brennstoff aus dem mit Brennstoff gefüllten Raum bei einer Betätigung der Ventilnadel abgespritzt. Bei dem Einsatz eines solchen bekannten Einspritzventils bei einer Brennstoffeinspritzanlage ergibt sich allerdings das Problem, dass speziell ein Startverhalten eines Motors ungünstig ist. Dieses Problem stellt sich insbesondere, wenn als Brennstoff ein Gemisch aus Benzin und Alkoholen, ein Dieselbrennstoff oder ein Gemisch aus Diesel und organischen Brennstoffen zum Einsatz kommt.

Aus DE 20 121 116 U1 und EP 1 657 425 A2 sind weitere Heizeinrichtungen bekannt.

### Offenbarung der Erfindung

Die erfindungsgemäße Heizeinrichtung mit den Merkmalen des Anspruchs 1, das erfindungsgemäße Brennstoffeinspritzventil mit den Merkmalen des Anspruchs 13 und die erfindungsgemäße Komponente eines Brennstoffeinspritzsystems mit den Merkmalen des Anspruchs 14 haben demgegenüber den Vorteil, dass eine vorteilhafte Wärmequelle mit einem sicheren Schutz gegen Überhitzung gewährleistet ist. Speziell kann bei der Aufheizung von flüssigen Brennstoffen ein zuverlässiger Überhitzungsschutz gewährleistet werden, da die Oberflächentemperatur des Heizelements begrenzt werden kann, um die Zündtemperatur eines Brennstoffes, insbesondere eines Brennstoffgemisches, nicht zu überschreiten.

Durch die in den Unteransprüchen aufgeführten Maßnahmen sind vorteilhafte Weiterbildungen der im Anspruch 1 angegebenen Heizeinrichtung, des im Anspruch 13 angegebenen Brennstoffeinspritzventils und der im Anspruch 14 angegebenen Komponente eines Brennstoffeinspritzsystems möglich.

Vorteilhaft ist es, dass das selbstregulierende Heizelement einen Kaltleiter aufweist. Ein solcher Kaltleiter ist durch einen PTC-Widerstand gebildet, der im Arbeitsbereich einen positiven Temperaturkoeffizienten aufweist. Mittels eines selbstregulierenden Heizelements ist ein zuverlässiger und schnell ansprechender Überhitzungsschutz gegeben. Beispielsweise ist bei der Vorwärmung von Brennstoffen, wie beispielsweise einem Gemisch aus Ethanol und Benzin, eine Limitierung der Oberflächentemperatur des Heizers auf cirka 200° C von Vorteil, um zu verhindern, dass eine Zündtemperatur des Brennstoffes erreicht wird. Eine solche Situation kann beispielsweise auftreten, wenn die Brennstoffzufuhr unterbrochen ist und der Flüssigkeitspegel im Bereich des Heizelements absinkt, so dass sich ein Gemisch aus Brennstoff und Luft zumindest teilweise im Bereich der Oberfläche des Heizelements bildet.

In vorteilhafter Weise steht eine Außenfläche des selbstregulierenden Heizelements in direktem Kontakt mit einem flüssigen Brennstoff, wodurch ein guter Wärmeübergang gewährleistet ist. Dabei ist es vorteilhaft, dass das selbstregulierende Heizelement aus einem kraftstoffbeständigen Werkstoff gebildet ist. Dabei kann das selbstregulierende Heizelement auch aus mehreren Werkstoffen bestehen, wobei ein Außenbereich aus einem kraftstoffbeständigen Werkstoff gebildet ist und ein Kernbereich des selbstregulierenden Heizelements aus einem anderen Werkstoff gebildet sein kann.

Vorteilhaft ist es auch, dass eine Außenfläche des selbstregulierenden Heizelements zumindest teilweise mit einer Schutzschicht beschichtet ist. Die Schutzschicht kann dabei auf einen Teil der Außenfläche begrenzt sein, der anfällig gegenüber der Einwirkung von Brennstoffen ist. Durch die Schutzschicht ist es möglich, eine höhere Widerstandsfähigkeit gegenüber den umgebenden Medien, insbesondere Brennstoff oder Wasser enthaltenden Dieselbrennstoff zu erzielen.

Ferner ist es vorteilhaft, dass die Schutzschicht Feststoffpigmente aufweist, die eine Wärmeleitfähigkeit der Schutzschicht verbessern. Die Feststoffpigmente können im Wesentlichen aus Bornitrid, Graphit und/oder Saliciumkarbid gebildet sein.

Das selbstregulierende Heizelement ist von dem Gehäuseteil umschlossen. In diesem Fall ist es ferner von Vorteil, dass das Gehäuseteil aus einem Wärme leitenden Kunststoff oder Komposit gebildet ist. Dabei kann das Gehäuseteil außerdem schlagfest und temperaturbeständig ausgestaltet sein, so dass ein Schutz des Heizelements gegenüber chemischer und mechanischer Beschädigung gewährleistet ist. Dadurch wird auch die Handhabung der Heizeinrichtung erleichtert. Insbesondere werden Beschädigungen beim Transport oder der Montage verhindert.

Ferner kann das Gehäuseteil auch aus mehreren Kunststoffkomponenten, insbesondere zwei Kunststoffkomponenten, gebildet sein. Hierbei ist es von Vorteil, dass die zweite Kunststoffkomponente, die einen Heizbereich des Heizelements umgibt, aus einem Wärme leitenden, kraftstoffbeständigem Werkstoff gebildet ist, der beispielsweise Wärme leitende Füllstoffe aufweist, um eine gute Wärmeleitung und damit ein relativ schnelles Ansprechverhalten im Hinblick auf einen Überhitzungsschutz zu erzielen. Solch ein Füllstoff kann aus einem Metallpulver, Graphit, Siliciumkarbid und/oder Bornitrid gebildet sein.

Die Geometrie des Heizelements kann in vorteilhafter Weise an den jeweiligen Anwendungsfall angepasst sein. Speziell kann der Heizbereich stiftförmig, scheibenförmig, lochscheibenförmig, ringförmig oder schlüsselförmig ausgestaltet sein. Dadurch kann zum einen durch die geschaffene Oberfläche die abgegebene Wärmemenge innerhalb gewisser Grenzen vorgegeben werden. Zum anderen kann im Fall der Aufheizung von flüssigen Medien, insbesondere Brennstoff, eine Anpassung an den zur Verfügung stehenden Bauraum und die Strömung des Brennstoffes ermöglicht werden.

### Zeichnung

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 eine Heizeinrichtung in einer schematischen Schnittdarstellung nicht entsprechend einem ersten Ausführungsbeispiel der Erfindung;
Fig. 2 eine Heizeinrichtung in einer schematischen Schnittdarstellung nicht entsprechend einem zweiten Ausführungsbeispiel der Erfindung;
Fig. 3 eine Heizeinrichtung in einer schematischen Schnittdarstellung entsprechend einem dritten Ausführungsbeispiel der Erfindung;
Fig. 4 eine Heizeinrichtung in einer schematischen Schnittdarstellung entsprechend einem vierten Ausführungsbeispiel der Erfindung;
Fig. 5 eine Kennlinie eines selbstregulierenden Heizelements einer Heizeinrichtung zur Erläuterung der Erfindung;
Fig. 6 eine Heizeinrichtung in einer schematischen Darstellung entsprechend einem fünften Ausführungsbeispiel der Erfindung;
Fig. 7 eine Heizeinrichtung in einer schematischen Darstellung entsprechend einem sechsten Ausführungsbeispiel der Erfindung;
Fig. 8 eine Heizeinrichtung in einer schematischen Darstellung entsprechend einem siebten Ausführungsbeispiel der Erfindung und
Fig. 9 eine als Brennstoffeinspritzventil ausgestaltete Komponente eines Brennstoffeinspritzsystems mit einer Heizeinrichtung entsprechend einem Ausführungsbeispiel der Erfindung.

### Beschreibung der Ausführungsbeispiele

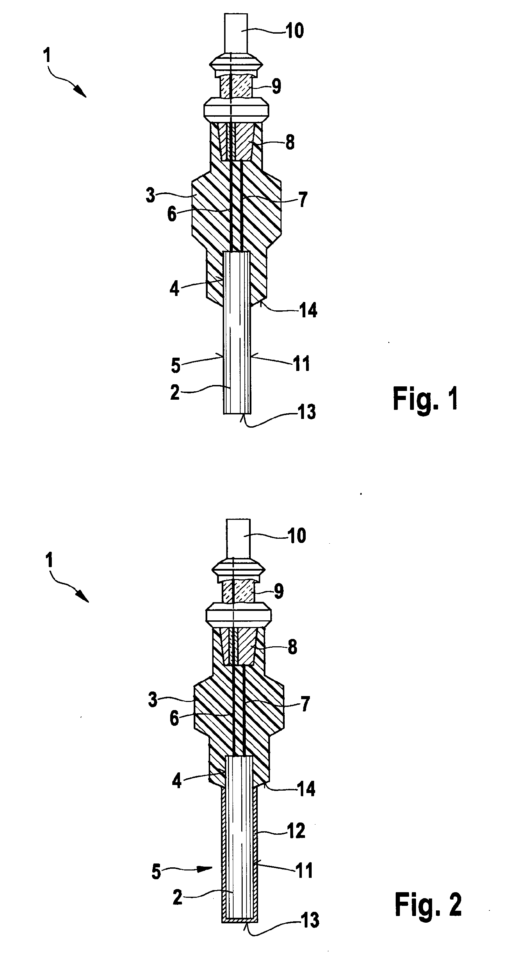

Fig. 1 zeigt eine Heizeinrichtung 1 mit einem selbstregulierenden Heizelement 2 nicht entsprechend einem ersten Ausführungsbeispiel der Erfindung. Die Heizeinrichtung 1 kann insbesondere als Heizer für flüssige Brennstoffe ausgestaltet sein. Speziell eignet sich die Heizeinrichtung für Brennstoffeinspritzanlagen von gemischverdichtenden, fremdgezündeten Brennkraftmaschinen oder von luftverdichtenden, selbstzündenden Brennkraftmaschinen, wobei als Brennstoff Benzin, Diesel, ein Gemisch aus Benzin oder Diesel mit anderen Brennstoffen oder dergleichen zum Einsatz kommen kann. Dabei können als Brennstoff oder Brennstoffkomponenten auch Alkohole, insbesondere Methanol oder Ethanol oder biologische Kraftstoffe, insbesondere Öle wie Rapsöl, zum Einsatz kommen.

Die erfindungsgemäße Heizeinrichtung 1 eignet sich jedoch auch für andere Anwendungsfälle.

Die Heizeinrichtung 1 weist ein Gehäuseteil 3 auf, in das das selbstregulierende Heizelement 2 teilweise eingebettet ist. Dabei ist ein Kontaktierungsbereich 4 des Heizelements 2 zumindest im Wesentlichen von dem Gehäuseteil 3 umgeben, während ein Heizbereich 5 des Heizelements 2 zumindest im Wesentlichen frei liegt, um einen direkten Kontakt mit einem flüssigen Medium, insbesondere flüssigem Brennstoff, zu ermöglichen. Im Kontaktierungsbereich 4 ist das Heizelement 2 mit zwei elektrischen Leitungen 6, 7 kontaktiert, die durch das Gehäuseteil 3 geführt sind, wodurch diese gegenüber der Umgebung abgedichtet sind. Die elektrische Leitung 7 verbindet das Heizelement 2 mit einem metallischen Kontaktelement 8, das beispielsweise einen Minuskontakt bildet. Die elektrische Leitung 6 ist einerseits mit dem Heizelement 2 verbunden. Ferner ist die elektrische Leitung 6 durch das Kontaktelement 8 und einen Isolationskörper 9 geführt, wobei die elektrische Leitung 6 gegenüber dem Kontaktelement 8 elektrisch isoliert ist. Außerdem ist ein Rundstecker 10 vorgesehen, der gegenüber dem Kontaktelement 8 mittels des Isolationskörper 9 isoliert und mit der elektrischen Leitung 6 verbunden ist. Durch Anlegen einer elektrischen Spannung an den Rundstecker 10 gegenüber dem mit Masse verbundenen Kontaktelement 8 kann das selbstregulierende Heizelement 2 mit einer gewünschten Spannung beaufschlagt werden, um eine Aufheizung des Heizelements 2 zumindest in dem Heizbereich 5 zu erzielen.

Bei der in Fig. 1 dargestellten Heizeinrichtung 1 ist eine Außenfläche 11 des selbstregulierenden Heizelements 2 im Heizbereich 5 freiliegend, so dass diese zum direkten Aufheizen eines Brennstoffes dient. Dabei ist das Heizelement im Wesentlichen stift- oder fingerförmig ausgestaltet. Das Heizelement 2 kann so ausgestaltet sein, dass eine Vorstehlänge von 20 mm bis 50 mm des Heizbereichs 5 und ein Durchmesser des Heizelements von 3,5 mm bis 5,5 mm gegeben sind. Es können aber auch andere Dimensionen vorliegen. Speziell bei einem Heizelement 2, bei dem eine mögliche Heiztemperatur auf 200° C oder dergleichen begrenzt ist, können einzelne Komponenten der Heizeinrichtung 1 aus einem Temperatur beständigen Kunststoff oder Kompositmaterial gefertigt werden, ohne dass es zu einer thermisch bedingten Beschädigung dieser Komponenten kommt. Beispielsweise kann das Gehäuseteil 3 aus einem Temperatur beständigen Kunststoff oder Kompositmaterial gebildet sein. Dabei kommen vorzugsweise Kunststoffe zum Einsatz, die gegenüber dem zu erwärmenden Medium, insbesondere Brennstoff, ausreichend resistent sind.

Ferner ist bei der in Fig. 1 dargestellten Heizeinrichtung 1, bei der das Heizelement 2 im Heizbereich 5 im direkten Kontakt mit dem Brennstoff steht, das Heizelement 2 aus einem Werkstoff gebildet, der gegenüber dem Brennstoff unter Berücksichtigung des möglichen Temperaturbereichs ausreichend resistent ist. Dies betrifft auch die Resistenz gegenüber organischen Säuren und dergleichen, die sich aus dem Brennstoff oder dem Brennstoffgemisch bilden können sowie gegenüber Halogenid haltigen wässrigen Lösungen. Der Werkstoff kann dabei aber in Bezug auf den jeweiligen Anwendungsfall und somit auf das jeweils mit dem Heizelement 2 in Berührung stehendem Medium optimiert sein.

Um eine schnelle und wirkungsvolle Aufheizung des umgebenden Mediums zu gewährleisten, ist in der Regel über eine relativ kleine Fläche eine hohe Wärmeabgabe erforderlich. Eine typische geforderte Heizleistung liegt bei etwa 150 W bis 250 W. Speziell im Fall eines Gehäuseteils 3, das auch den Heizbereich 5 teilweise umschließt, ist ein guter Wärmetransport durch das Gehäuseteil 3 von Vorteil.

Da das in der Fig. 1 dargestellte Heizelement im direkten Kontakt mit einem brennbaren Brennstoff steht, ist ein zuverlässiger und schnell ansprechender Überhitzungsschutz erforderlich. Eine Außenfläche 11 des Heizelements 2 sollte die Zündtemperatur des Brennstoffes zu keinem Zeitpunkt überschreiten. Typischerweise ist die Wärmeabgabe des Heizelements 2 in Flüssigkeiten cirka vier- bis sechsfach höher als an Luft. Deshalb kann beim Absinken des Flüssigkeitsniveaus, beispielsweise bei einer Unterbrechung der Brennstoffzufuhr, schon nach sehr kurzer Zeit Überhitzung eintreten. Dadurch besteht die Gefahr der Entflammung oder Explosion des Brennstoff-Luft-Gemisches. Dementsprechend wichtig ist ein schnell ansprechender Überhitzungsschutz, der die Oberflächentemperatur des Heizelements 2 an der Außenfläche 11 limitiert, beispielsweise auf unter 200° C. Dadurch ist verhindert, dass die Zündtemperatur des Brennstoffgemisches erreicht wird. Beispielsweise liegt die Zündtemperatur von Benzin je nach Zusammensetzung im Bereich von etwa 200° C bis 280° C. Die Zündtemperatur von Methanol, Ethanol oder Mischungen liegt im Bereich von cirka 400° C bis 430° C. In Bezug auf den jeweiligen Anwendungsfall kann gegebenenfalls eine Optimierung hinsichtlich des gewählten Heizelements 2 erfolgen, um einerseits eine hohe Wärmeabgabe und andererseits einen zuverlässigen Überhitzungsschutz zu gewährleisten.

Das Gehäuseteil 3 nimmt das Heizelement 2 auf und bildet die äußere Form der Heizeinrichtung 1. Das Gehäuseteil 3 ist aus einem Temperatur beständigen und schlagfesten Kunststoff gebildet und kann beispielsweise im Spritzguss in einem Schritt aus einer Kunststoffkomponente gefertigt sein, so dass eine kostengünstige Herstellung der Heizeinrichtung 1 möglich ist.

Fig. 2 zeigt eine Heizeinrichtung 1 in einer schematischen Darstellung nicht entsprechend einem zweiten Ausführungsbeispiel der Erfindung. In diesem Ausführungsbeispiel ist die Außenfläche 11 des Heizelements 2 der Heizeinrichtung 1 zumindest im Heizbereich 5 mit einer Schutzschicht 12 beschichtet. Die Schutzschicht 12 erstreckt sich dabei von einer Spitze 13 des Heizelements 2 bis zu einem Dichtkonus 14, der an dem Gehäuseteil 3 ausgebildet ist. Die Schutzschicht 12 kann nachträglich auf das Heizelement 2 aufgetragen werden, beispielsweise durch Tauchen oder Aufstreichen. In vorteilhafter Weise ist die Schutzschicht 12 aus einem Medien resistenten, insbesondere Brennstoff resistenten, Schutzlack ausgestaltet, der durch Zuschläge von geeigneten Feststoffpigmenten besonders gut wärmeleitfähig ist. Als Feststoffpigmente kommen beispielsweise Bornitrid, Graphit und/oder Saliciumkarbid in Frage. Beispielsweise kann die Schutzschicht 12 aus einem mit Bornitrid gefüllten Epoxitharz oder Silikonkleber gebildet sein.

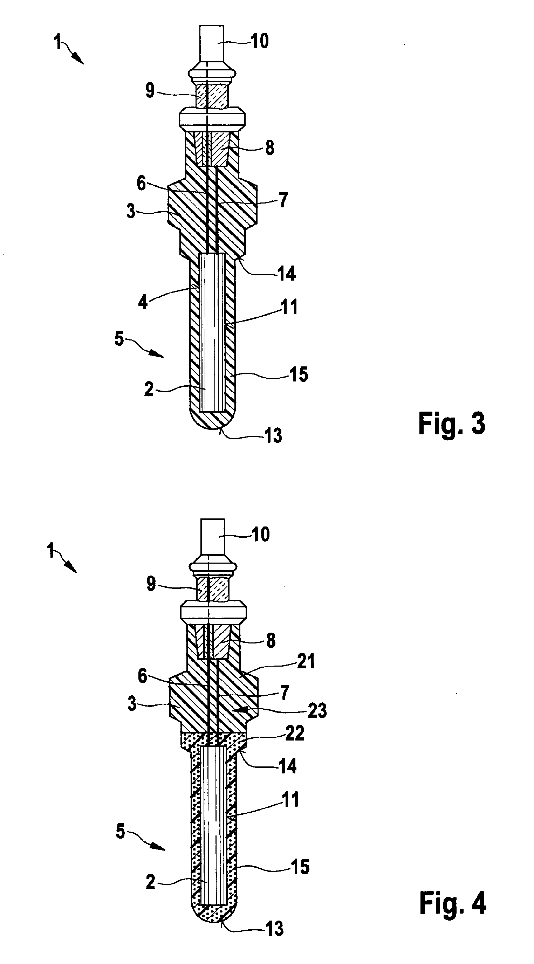

Fig. 3 zeigt eine Heizeinrichtung 1 in einer schematischen Darstellung entsprechend einem dritten Ausführungsbeispiel der Erfindung. In diesem Ausführungsbeispiel ist das selbstregulierende Heizelement 2 vollständig von dem Gehäuseteil 3 umschlossen. In Abhängigkeit von der Ausgestaltung des Heizelements 2 ist die maximale Temperatur des Heizelements 2 an der Außenfläche 11 auf einen gewissen

Wert begrenzt, so dass eine thermische Beschädigung des Gehäuseteils 3 durch eine geeignete Wahl eines Werkstoffes durch das Gehäuseteil 3 verhindert werden kann. Speziell ist der Heizbereich 5 des selbstregulierenden Heizelements 2 mit einer Ummantelung 15 des Gehäuseteils 3 umgeben, die sich von der Spitze 13 bis zu dem Dichtkonus 14 erstreckt, wobei eine thermische Beschädigung der Ummantelung 15 verhindert ist. Das Gehäuseteil 3 mit der Ummantelung 15 umschließt daher sowohl den Heizbereich 5 a als auch den Kontaktierungsbereich 4 des Heizelements 2. Als Werkstoff für das Gehäuseteil 3 eignet sich insbesondere ein Temperatur beständiger, schlagfester und gut Wärme leitender Kunststoff oder ein geeignetes Komposit. Eine kostengünstige Herstellung des Gehäuseteils 3 ist im Spritzguss in einem Schritt aus einer Kunststoffkomponente möglich.

Je nach Anwendungsfall kann in den Werkstoff des Gehäuseteils 3, insbesondere in die Ummantelung 15, ein Zuschlagstoff zur Verbesserung der Wärmeleitung eingebracht werden.

Fig. 4 zeigt eine Heizeinrichtung 1 in einer schematischen Schnittdarstellung entsprechend einem vierten Ausführungsbeispiel der Erfindung. In diesem Ausführungsbeispiel ist das Gehäuseteil 3 aus einer ersten Kunststoffkomponente 21 und einer zweiten Kunststoffkomponente 22 gebildet. Dabei umgibt die erste Kunststoffkomponente 21 in einem Bereich 23 abschnittsweise die elektrischen Leitungen 6, 7, die durch das Gehäuseteil 3 zu dem Heizelement 2 geführt sind. Die zweite Kunststoffkomponente 22 umgibt zumindest einen Heizbereich 5 des Heizelements 2, wobei in dem dargestellten Ausführungsbeispiel das Heizelement 2 vollständig von der zweiten Kunststoffkomponente 22 umschlossen ist. Die zweite Kunststoffkomponente 22 ist aus einem Wärme leitenden, Kraftstoff beständigen Werkstoff gebildet. Dabei weist die zweite Kunststoffkomponente einen Wärme leitenden Füllstoff auf, der die Wärmeleitung von dem selbstregulierenden Heizelement 2 durch die zweite Kunststoffkomponente 22 zu dem umgebenden Medium verbessert.

Durch die Ausgestaltung des Gehäuseteils 3 aus zwei oder mehr Kunststoffkomponenten 21, 22 kann zum einen ein preiswertes Standardmaterial und zum anderen ein gut Wärme leitendes Speziellmaterial eingesetzt werden, so dass sich eine relativ kostengünstige Herstellung bei einer optimierten Heizleistung ergibt.

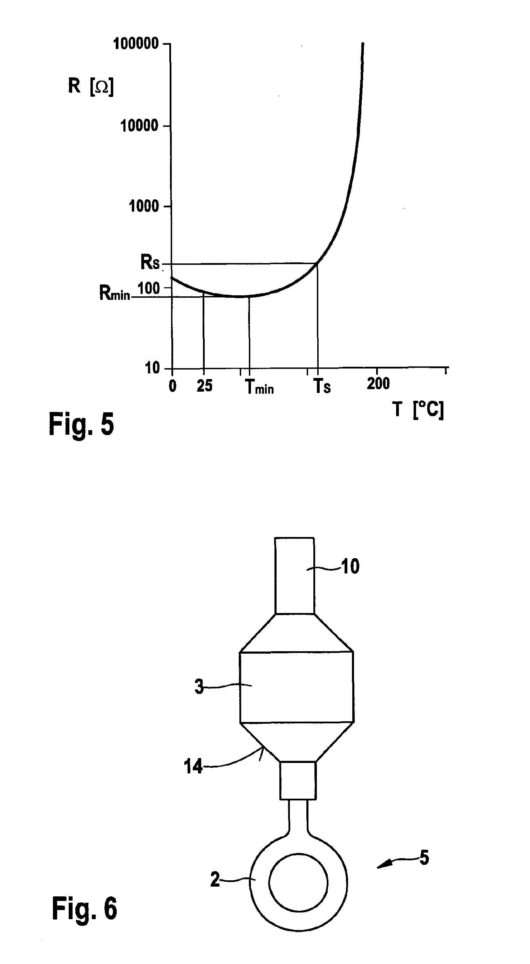

Fig. 5 zeigt eine Kennlinie eines selbstregulierenden Heizelements 2 in einem Diagramm zur Erläuterung der Erfindung. Dabei ist ein Widerstand R in Ohm auf der Ordinate gegen die Temperatur T in Grad Celsius auf der Abszisse angetragen. Hierbei ist bezüglich des an der Ordinate angetragenen Widerstandes R eine logarithmische Darstellung erwählt. Das selbstregulierende Heizelement 2 ist vorzugsweise als Kaltleiter ausgestaltet, wobei sich in dem maßgeblichen Temperaturbereich ein positiver Temperaturkoeffizient des Widerstandes ergibt. Beispielsweise kann das Heizelement 2 auf der Basis eines Bariumtitanats gebildet sein.

Als selbstregulierendes Heizelement 2 kann eine weitgehend spannungsunabhängige Einregelung auf eine Schalttemperatur T_{S} erfolgen. Ausgehend von der Temperatur Tₘᵢₙ, bei der sich ein Widerstand Rₘᵢₙ ergibt, steigt der Widerstand R mit zunehmender Temperatur T kontinuierlich an, wobei in dem dargestellten Ausführungsbeispiel eine Temperatur von 200° C auf Grund des erheblich ansteigenden Widerstandes R nicht überschritten werden kann. Bei der Schalttemperatur T_{S} ergibt sich ein Widerstand R_{S}, der zusammen mit der gewählten Spannung die abgegebene Heizleistung des Heizelement 2 bestimmt. Dadurch ist es möglich, in Abhängigkeit vom jeweiligen Anwendungsfall ein geeignetes Heizelement 2 auszuwählen, bei dem zum einen die abgegebene Heizleistung eine gewünschte Erwärmung des umgebenden Mediums erzielt und zum anderen eine Temperaturbegrenzung, beispielsweise auf unter 200° C, gewährleistet ist. Speziell kann die Schalttemperatur T_{S} im Bereich von 120° C bis 300° C durch Auswahl eines geeigneten selbstregulierenden Heizelements 2 gewählt werden, wobei vorzugsweise ein Heizelement 2 mit einer Schalttemperatur zwischen etwa 170° C und 210° C gewählt ist, um Brennstoffe aufzuheizen.

Die geometrische Ausgestaltung des Heizelements 2 kann durch einen einseitig kontaktierten, zylindrischen, elliptischen oder quaderförmigen Körper definiert sein. Es sind aber auch andere Ausgestaltungen möglich, beispielsweise mehrere als Stapel geschichtete und in Reihe geschaltete, scheibenförmige Heizelemente zur Ausgestaltung des Heizelements 2.

Das Gehäuseteil 3 kann beispielsweise aus einem Polyamid gebildet sein, das eine Temperaturbeständigkeit von mehr als 260° C aufweist. Insbesondere für die zweite Kunststoffkomponente 22 kann ein Werkstoff mit einer verbesserten Leitfähigkeit eingesetzt werden, beispielsweise E3603 Polyamid 4,6 (PA4,6) mit einer thermischen Leitfähigkeit von 18 W/mK; E5101 Polyphenylensulfid (PPS) mit einer thermischen Leitfähigkeit von 20 W/mK, das bis 260° C temperaturbeständig ist; oder ein Fluorpolymer wie PTFE oder PVDF, die noch höhere Einsatzgrenzen haben.

Bei der Verarbeitung und Formgebung eines Komposits für den Heizbereich 5, insbesondere die zweite Kunststoffkomponente 22, können auch zusätzliche Füllstoffe bis zur Verarbeitungsgrenze beigefügt werden. In Frage kommen feinteilige Pulver aus Metall, beispielsweise Kupfer oder Aluminium oder andere thermisch gut leitende Materialien, beispielsweise Graphit, Siliciumkarbid und Bornitrid, die die Wärmeleitfähigkeit verbessern. Zusätzlich kann die Wärmeabfuhr über der Kompositoberfläche durch dünne Wandstärken oder durch Vergrößerung der Oberfläche mittels Strukturierung optimiert werden.

Fig. 6 zeigt eine Heizeinrichtung 1 in einer schematischen Darstellung entsprechend einem fünften Ausführungsbeispiel. In diesem Ausführungsbeispiel ist das selbstregulierende Heizelement 2 im Heizbereich 5 als Ring- oder Lochscheibe ausgestaltet. Dies ermöglicht ein vorteilhaftes Umfließen des Heizelements 2 mit Brennstoff, beispielsweise in einer Brennstoffleitung.

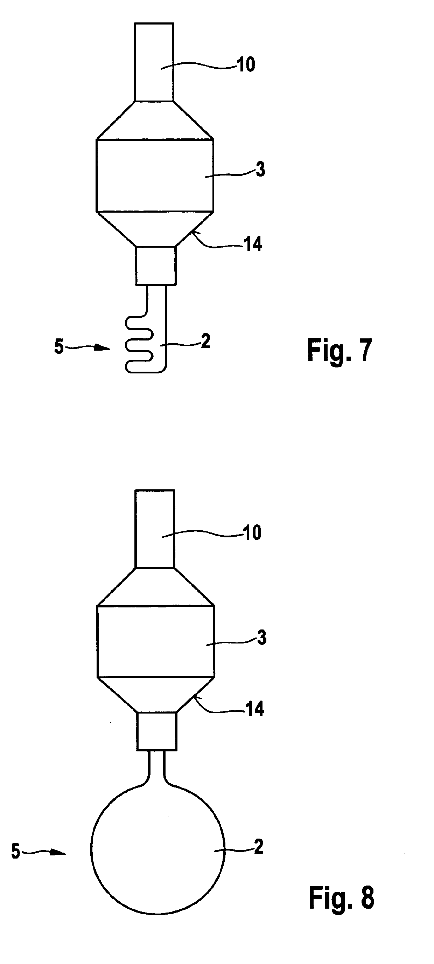

Fig. 7 zeigt eine Heizeinrichtung 1 in einer schematischen Darstellung entsprechend einem sechsten Ausführungsbeispiel der Erfindung. In diesem Ausführungsbeispiel ist das Heizelement 2 schlüsselförmig ausgestaltet, so dass sich ebenfalls eine vergrößerte Oberfläche ergibt.

Fig. 8 zeigt eine Heizeinrichtung 1 in einer schematischen Darstellung entsprechend einem siebten Ausführungsbeispiel. In diesem Ausführungsbeispiel ist das selbstregulierende Heizelement 2 scheibenförmig ausgestaltet, so dass eine verbesserte Wärmeabgabe an das umgebende Medium erzielt werden kann.

Bei den anhand der Fig. 6 bis 8 dargestellten Ausführungsbeispielen ist es möglich, zusätzlich eine anhand der Fig. 2 bis 4 beschriebenen Maßnahmen vorzusehen.

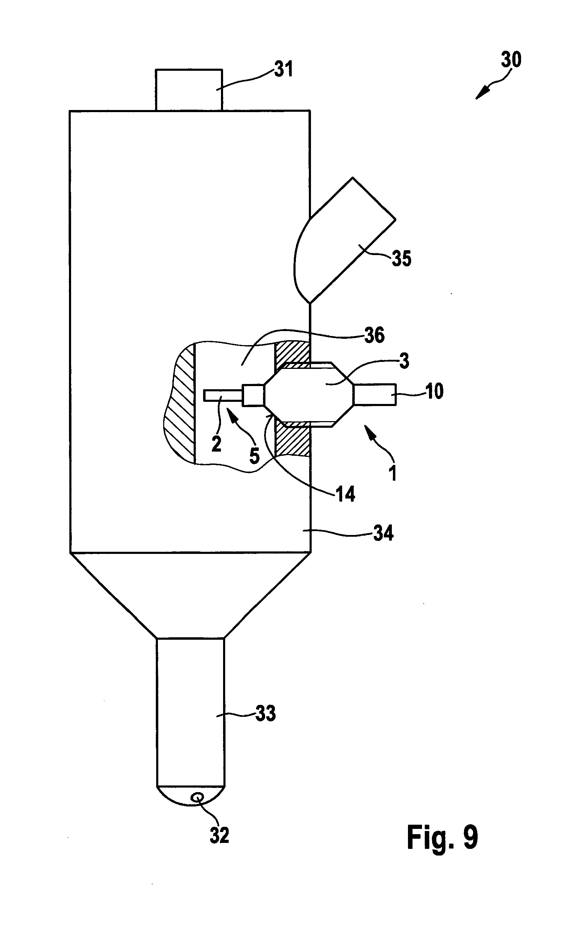

Fig. 9 zeigt eine als Brennstoffeinspritzventil 30 ausgestaltete Komponente eines Brennstoffeinspritzsystems entsprechend einem Ausführungsbeispiel der Erfindung. Das Brennstoffeinspritzventil 30 weist einen elektrischen Anschluss 31 auf, mittels dem sich das Brennstoffeinspritzventil 30 über elektrische Leitungen an ein Steuergerät anschließen lässt, um ein Abspritzen von Brennstoff über zumindest eine Düsenöffnung 32 in einen Düsenkörper 33 zu steuern. Ferner weist das Brennstoffeinspritzventil 30 ein mit dem Düsenkörper 33 verbundenes Ventilgehäuse 34 auf, an dem ein Brennstoffeinlassstutzen 35 vorgesehen ist. Über den Brennstoffeinlassstutzen 35 ist Brennstoff in das Ventilgehäuse 34 einleitbar, wobei der Brennstoff durch das Ventilgehäuse 34 und den Düsenkörper 33 zu der Düsenöffnung 32 geführt ist. Vereinfacht ist in der Fig. 9 eine teilweise geöffnete Darstellung des Brennstoffeinspritzventils 30 gezeigt, die einen Brennstoffraum 36 innerhalb des Ventilgehäuses 34 zeigt. Der Brennstoffraum 36 kann dabei auch durch einen Brennstoffkanal gebildet sein. Die Heizeinrichtung 1 ist teilweise in das Ventilgehäuse 34 eingeschraubt, wobei eine Abdichtung an dem Dichtkonus 14 des Gehäuses 3 gegenüber dem Ventilgehäuse 34 erfolgt. Dadurch befindet sich das Heizelement 2 in dem Brennstoffraum 36, so dass an dem Heizbereich 5 des Heizelements 2 vorbei fließender Brennstoff vorgewärmt wird.

Es ist anzumerken, dass der Einsatz der Heizeinrichtung 1 in ein Brennstoffeinspritzventil 30, wie es in der Fig. 9 gezeigt ist, ein möglicher Einsatz ist. Weitere Einsatzmöglichkeiten bestehen auch in der Thermotechnik oder Sicherheitstechnik, wobei eine kompakte, überhitzungssichere Heizeinrichtung 1 zum Kälteschutz für empfindliche Einrichtungen im Außenbereich, beispielsweise Pumpen, Stellmotoren oder Kameras, eingesetzt werden kann.

Die Erfindung ist nicht auf die beschriebenen Ausführungsbeispiele beschränkt.

## Patentansprüche

1. Heizeinrichtung (1), insbesondere Heizer für flüssige Brennstoffe, mit zumindest einem Gehäuseteil (3) und einem zumindest teilweise in das Gehäuseteil (3) eingebetteten Heizelement (2), wobei das Heizelement (2) als selbstregulierendes Heizelement (2) ausgestaltet ist, **dadurch gekennzeichnet, dass** das selbstregulierende Heizelement (2) von dem Gehäuseteil (3) umschlossen ist, welches aus einem Wärme leitenden Kunststoff oder Komposit gebildet ist.

2. Heizeinrichtung nach Anspruch 1, **dadurch gekennzeichnet, dass** das Gehäuseteil (3) aus einer ersten Kunststoffkomponente (21) und zumindest einer zweiten Kunststoffkomponente (22) gebildet ist, dass die erste Kunststoffkomponente zumindest abschnittsweise elektrische Leitungen (6, 7) zur Kontaktierung des Heizelements (2) umgibt, dass die zweite Kunststoffkomponente (22) einen Heizbereich (5) des Heizelements (2) umgibt und dass die zweite Kunststoffkomponente (22) aus einem Wärme leitenden, kraftstoffbeständigen Werkstoff gebildet ist.

3. Heizeinrichtung nach Anspruch 2, **dadurch gekennzeichnet, dass** die zweite Kunststoffkomponente (22) zumindest einen Wärme leitenden Füllstoff aufweist.

4. Heizeinrichtung nach Anspruch 3, **dadurch gekennzeichnet, dass** der Füllstoff zumindest im Wesentlichen aus einem Metallpulver, Graphit, Saliciumkarbid und/oder Bornitrid gebildet ist.

5. Heizeinrichtung nach einem der Ansprüche 1 bis 4, **dadurch gekennzeichnet, dass** das Heizelement (2) zumindest einen Heizbereich (5) aufweist und dass der Heizbereich stiftförmig, scheibenförmig, lochscheibenförmig, ringförmig oder schlüsselförmig ausgestaltet ist.

## Claims

1. Heating unit (1), in particular heater for liquid fuels, with at least one housing part (3) and with a heating element (2) embedded at least partially into the housing part (3), the heating element (2) being configured as a self-regulating heating element (2), **characterized in that** the self-regulating heating element (2) is surrounded by the housing part (3) which is formed from a heat-conducting plastic or composite.

2. Heating unit according to Claim 1, **characterized in that** the housing part (3) is formed from a first plastic component (21) and at least one second plastic component (22), **in that** the first plastic component at least partially surrounds the electrical lines (6, 7) for contacting the heating element (2), **in that** the second plastic component (22) surrounds a heating region (5) of the heating element (2), and **in that** the second plastic component (22) is formed from a heat-conducting fuel-resistant material.

3. Heating unit according to Claim 2, **characterized in that** the second plastic component (22) has at least one heat-conducting filler.

4. Heating unit according to Claim 3, **characterized in that** the filler is formed at least essentially from a metal powder, graphite, silicon carbide and/or boronitride.

5. Heating unit according to one of Claims 1 to 4, **characterized in that** the heating element (2) has at least one heating region (5), and **in that** the heating region has a pin-shaped, disc-shaped, perforated disc-shaped, ring-shaped or key-shaped configuration.

## Revendications

1. Dispositif de chauffage (1), en particulier réchauffeur de carburants liquides, comprenant au moins une partie de boîtier (3) et un élément chauffant (2) encastré au moins partiellement dans la partie de boîtier (3), l'élément chauffant (2) étant configuré sous forme d'élément chauffant (2) autorégulé, **caractérisé en ce que** l'élément chauffant (2) autorégulé est entouré par la partie de boîtier (3), laquelle est formée à partir d'un plastique ou d'un composite thermoconducteur.

2. Dispositif de chauffage selon la revendication 1, **caractérisé en ce que** la partie de boîtier (3) est formée à partir d'un premier composant en plastique (21) et d'au moins un deuxième composant en plastique (22), **en ce que** le premier composant en plastique entoure au moins en partie des lignes électriques (6, 7) pour la mise en contact de l'élément chauffant (2), **en ce que** le deuxième composant en plastique (22) entoure une région chauffante (5) de l'élément chauffant (2) et **en ce que** le deuxième composant en plastique (22) est formé à partir d'un matériau thermoconducteur résistant aux carburants.

3. Dispositif de chauffage selon la revendication 2, **caractérisé en ce que** le deuxième composant en plastique (22) comprend au moins une charge thermoconductrice.

4. Dispositif de chauffage selon la revendication 3, **caractérisé en ce que** la charge est formée au moins essentiellement à partir d'une poudre métallique, de graphite, de carbure de silicium et/ou de nitrure de bore.

5. Dispositif de chauffage selon l'une quelconque des revendications 1 à 4, **caractérisé en ce que** l'élément chauffant (2) comprend au moins une région chauffante (5) et **en ce que** la région chauffante est configurée en forme de cheville, en forme de disque, en forme de disque perforé, en forme d'anneau ou en forme de clef.
